Europäisches Patentamt

European Patent Office

Office européen des brevets

(11) Veröffentlichungsnummer: **0 230 269 A2**

## (12) EUROPÄISCHE PATENTANMELDUNG

(21) Anmeldenummer: **87100440.4**

(22) Anmeldetag: **15.01.87**

(51) Int. Cl.⁴: **B 60 J 3/02**

(30) Priorität: **22.01.86 DE 3601762**

(43) Veröffentlichungstag der Anmeldung:
**29.07.87 Patentblatt 87/31**

(84) Benannte Vertragsstaaten: **DE FR GB IT SE**

(71) Anmelder: **Gebr. Happich GmbH**
**Postfach 10 02 49 Clausenbrücke 1**
**D-5600 Wuppertal 1 (DE)**

(72) Erfinder: **Viertel, Lothar**
**Jutta v. Hattsteinstrasse 41**
**D-6636 Berus Überherrn (DE)**

**Ebert, Charles**
**7. Rue du Parc**
**F-70300 Luxeuil (FR)**

**Krehl, Hermann**
**Hebelweg 9**
**D-7570 Baden-Baden (DE)**

**Hilbert, Bernard**
**526 Rue de la Forèt**
**F-57450 Cappel (FR)**

**Walter, Rüdiger**
**An den Martinsgärten 8**
**D-6802 Ladenburg (DE)**

(54) **Sonnenblende für Fahrzeuge.**

(57) Die beschriebene Sonnenblende weist einen auf Kunststoffschaum bestehenden Sonnenblendenkörper (1) auf, in dem eine aus zwei Drahtabschnitten (8, 11) bestehende Verstärkungseinlage, ein Lagergehäuse (3) und ein Gegenlagerstift (7) eingelagert sind. Das Lagergehäuse (3) weist eine Stecköffnung (9) und Steckaufnahmen für jeweils einen Endbereich der Drahtabschnitte (8, 11) sowie eine Stecköffnung (12) für die Aufnahme einer anderendig in eine Stecköffnung (30) eines Lagerbocks (31) eingriefende Sonnenblendenachse (15) und einer Feder (13) auf. Der Gegenlagerstift (7) ist ebenfalls mit Stecköffnungen (10, 33) für die Aufnahme der anderen Endbereiche der Drahtabschnitte (8, 11) ausgebildet. Die Feder (13) wird durch den Drahtabschnitt (8) in der Steckaufnahme (12) gehalten.

Fig.1

EP 0 230 269 A2

**Beschreibung**

Sonnenblende für Fahrzeuge

Die Erfindung bezieht sich auf eine Sonnenblende für Fahrzeuge, bestehend aus einem plattenförmigen Sonnenblendenkörper mit etwa rechteckiger Umrißkontur, der aus Schaumkunststoff gebildet, mit einer Umhüllung versehen und durch eine Verstärkungseinlage ausgesteift ist und der an einem Endbereich einer Längskante ein mit der Verstärkungseinlage verbundenes, im Schaumkunststoff eingelagertes Lagergehäuse und am anderen Endbereich derselben Längskante eine, eine Aussparung des Sonnenblendenkörpers querenden, lösbar in die Lageraufnahme eines an der Fahrzeugkarosserie befestigbaren Gegenlagers einrastbaren Gegenlagerstift aufweist, wobei das Lagergehäuse zur Aufnahme einer Feder sowie eines durch diese belasteten Achsschenkels einer etwa L-förmig ausgebildeten Sonnenblendenachse dient, deren anderer Achsschenkel in der Aufnahmebohrung eines an der Fahrzeugkarosserie befestigbaren Lagerbocks angeordnet ist.

Eine Sonnenblende der gattungsgemäßen Art ist in der DE-AS 12 59 725 gezeigt und beschrieben. Die bekannte Sonnenblende weist einen relativ komplizierten Aufbau auf, weil die Verstärkungseinlage, die aus einzelnen Drahtzuschnitten besteht, in aufwendiger Weist gebogen werden muß, weil das Lagergehäuse aus einem Blechzuschnitt geformt werden muß und weil die Teile durch Schweißen aneinander festzulegen sind. Ähnliche Verhältnisse liegen auch bei einer durch die DE-AS 11 11 986 bekanntgewordenen Sonnenblende vor. Aus der DE-AS 11 79 353 ergibt sich, wie aufwendig und vielteilig allein die Verbindung zwischen der Sonnenblendenachse und dem Lagerbock herkömmlicherweise gestaltet ist.

Der Erfindung liegt die Aufgabe zugrunde eine Sonnenblende der eingangs genannten Art in der Herstellung zu vereinfachen und zu verbilligen und das notwendige Zusammenfügen der Sonnenblendeneinzelteile zu erleichtern.

Diese Aufgabe wird erfindungsgemäß dadurch gelöst, daß die Verstärkungseinlage aus zwei Drahtabschnitten besteht, von denen der erste geradlinig mit den Lagergehäuse und dem Gegenlagerstift verbunden ist, während der Zweite U-förmig gebogen ist und gegeneinander gerichtet abgewinkelte, ebenfalls mit dem Lagergehäuse und dem Gegenlagerstift verbundene Schenkelendbereiche aufweist, daß die Drahtabschnitte durch Steckverbindungen am Lagergehäuse und am Gegenlagerstift festgelegt sind, daß das Lagergehäuse an einem Stirnende eine Stecköffnung für den geraden Drahtabschnitt und am anderen Stirnende eine Stecköffnung für die gemeinsame Aufnahme der Feder und des Achsschenkels der Sonnenblendenachse aufweist, daß die für die Aufnahme der Feder und des Achsschenkels der Sonnenblendenachse vorgesehene Stecköffnung des Lagergehäuses eine Bodenwandung, zwei senkrecht daran angrenzende Seitenwandungen und eine halbkreisförmige, dem Radius der Sonnenblendenachse entsprechende Kopfwandung aufweist, daß die Stecköffnung im Bereich der Kopfwandung einen den Öffnungsquerschnitt einengenden Vorsprung aufweist, der in eine Ringnut des Achsschenkels eingerastet ist, daß die Stecköffnungen des Lagergehäuses ineinander übergehen, daß die in der Stecköffnung angeordnete Feder eine Blattfeder ist, die einendig eine um 180° umgebogene, sich auf der Bodenwandung der Stecköffnung abstützende Federzunge, anderendig eine abgewinkelte Lasche mit einem Steckloch zur kraftschlüssigen Verbindung mit dem entsprechenden Endbereich des geraden Drahtabschnitts und zwischen der Federzunge und der Lasche einen bogenförmigen Verlauf aufweist und daß zwischen dem Lagerbock und dem entsprechenden Achsschenkel der Sonnenblendenachse eine Steckverbindung vorgesehen ist, wobei der Durchmesser der Bohrung im Lagerbock kleiner als der Achsschenkeldurchmesser ist und der Achsschenkel zumindest eine Ringnut im Verbindungsbereich aufweist.

Die einzelnen Teile der erfindungsgemäßen Sonnenblende sind kleine, einfache und kostengünstig herzustellende Bauelemente, die - und das ist wesentlich -durch eine schnell und einfach durchzuführende Steckmontage, gegebenenfalls durch eine Montagevorrichtung unterstützt, miteinander verbunden werden können.

Gemäß der Erfindung kann der Gegenlagerstift zwei durch eine Wand voneinander getrennte, jeweils von den Stirnenden her zugängliche Stecköffnungen für die Drahtabschnitte aufweisen. Durch diese Maßnahme erfolgt eine Trennung der Drahtabschnitte, was wichtig ist, wenn die Sonnenblende mit einer Beleuchtungseinrichtung ausgerüstet werden soll und wenn die Drahtabschnitte als Leiter für die elektrische Stromversorgung mitbenutzt werden sollen.

Zur einfachen und kostengünstigen Herstellung der Sonnenblende trägt es bei, wenn nach einem weiteren Merkmal der Erfindung vorgesehen wird, daß das Lagergehäuse, der Gegenlagerstift und der Lagerbock als Kunststoff -Spritzgußkörper ausgebildet sind. Für den in der Stecköffnung des Lagergehäuses vorgesehen Vorsprung, der zur axialen Festlegung der Lagerachse im Lagergehäuse dient, bietet sich dann eine Zwangsentformung an.

Eine weitere Ausgestaltung der Erfindung kann darin bestehen, daß der Gegenlagerstift an seinen Endbereichen radial angeformte Materialansätze aufweist, die im Schaumkunststoff verankert sind, wodurch für den Gegenlagerstift ein zuverlässiger Verdrehschutz gewährleistet ist.

In weiterer bevorzugter Ausgestaltung der Erfindung, weist das Lagergehäuse einen senkrecht zu den Stecköffnungen ausgerichteten mit dem gebogegen Drahtabschnitt verbundenen stegförmigen Materialansatz auf und der gebogene Drahtabschnitt ist derart am Lagergehäuse festgelegt, daß einer der Schenkelendbereiche das Lagergehäuse im Bereich der den Achsschenkel und die Feder aufnehmenden Stecköffnung untergreift. Hierdurch wird eine dem Federdruck entgegenwirkende Stabilisierung erreicht.

Eine Weiterbildung der Erfindung kann darin bestehen, daß an den Drahtabschnitten jeweils zumindest ein Kontaktblech durch Punktschweißen, Verkrallen oder dergleichen befestigt ist, daß zwischen den Kontaktblechen eine elektrische Glühlampe (Soffitte) angeordnet ist und daß in den Gegenlagerstift ein mit dem gebogenen Drahtabschnitt verbundener Kontakt eingesetzt ist, der mit einem in der Lageraufnahme des Gegenlagers angeordneten Gegenkontakt kontaktiert. Die elektrische Stromversorgung der Glühlampe kann hierbei in an sich bekannter Weise über die Fahrzeugelektrik erfolgen.

Ausführungsbeispiele der Erfindung werden nachfolgend anhand der Zeichnung näher erläutert. Es zeigen:

Fig. 1 ein erstes Ausführungsbeispiel der Sonnenblende,

Fig. 2 bis 6 Einzelheiten der Sonnenblende nach Fig. 1,

Fig. 7 ein zweites Ausführungsbeispiel der Sonnenblende,

Fig. 8 und 9 Einzelheiten der Sonnenblende nach Fig. 7.

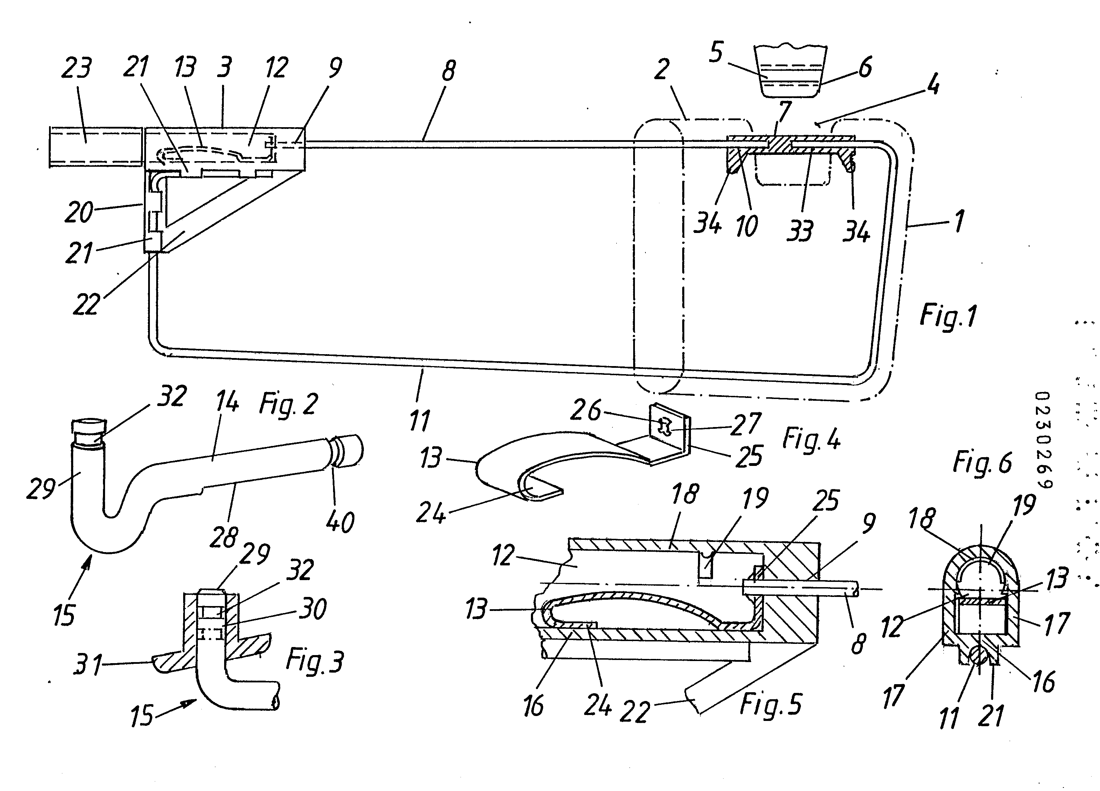

Fig. 1 zeigt einen nur strichpunktiert angedeuteten Sonnenblendenkörper 1 aus Schaumkunststoff, der von einer nicht dargestellten Hüllfolie umgeben ist und der eine eingelagerte Verstärkungseinlage aufweist. Der Sonnenblendenkörper 1 weist eine plattenförmige Ausbildung mit etwa rechteckiger Umrißkontur auf und ist an einem Endbereich seiner oberen Längskante 2 mit einem mit der Verstärkungseinlage verbundenen, im Schaumkunststoff eingelagerten Lagergehäuse 3 ausgerüstet und am anderen Endbereich derselben Längskante 2 mit einem, eine Aussparung 4 des Sonnenblendenkörpers 1 querenden, lösbar in die Lageraufnahme 5 eines an der Fahrzeugkarosserie befestigbaren Gegenlagers 6 einrastbaren Gegenlagerstift 7 versehen.

Die Verstärkungseinlage besteht aus einem ersten geraden Drahtabschnitt 8, der zwischen dem Lagergehäuse 3 und dem Gegenlagerstift 7 angeordnet ist und der mit seinem einen Ende in eine Stecköffnung 9 des Lagergehäuses 3 und mit seinem anderen Ende in eine Stecköffnung 10 des Gegenlagerstifts 7 eingreift, sowie aus einem zweiten gebogenen Drahtabschnitt 11, der U-förmig ist, wobei die freien Endbereich der U-Schenkel gegeneinander gerichtet abgewinkelt und am Lagergehäuse 3 und am Gegenlagerstift 7 festgelegt sind.

Das als Kunststoff - Spritzgußteil ausgebildete Lagergehäuse 3 weist neben der Stecköffnung 9 eine zweite vom anderen Stirnende her zugängliche Stecköffnung 12 auf, in der die Stecköffnung 9 mündet und die zur Aufnahme einer Feder 13 sowie eines Achsschenkels 14 einer etwa L-förmig gebogenen Sonnenblendenachse 15 dient. Die Stecköffnung 12 weist im oberen Bereich einem halbkreisförmigen Öffnungsquerschnitt auf, der in einem rechteckigen Öffnungsquerschnitt übergeht, oder mit anderen Worten, die Stecköffnung 12 ist umgrenzt durch eine Bodenwandung 16, zwei senkrecht daran angrenzende Seitenwandungen 17 und eine halbkreisförmige, dem Radius den Sonnenblendenachse 15 entsprechende Kopfwandung 18. Innerhalb der Stecköffnung 12 ist ein radial nach innen hervortretender Vorsprung 19 angeformt, der warzenförmig oder, wie dargestellt, als Wulst ausgebildet sein kann. Das Lagergehäuse 3 weist weiterhin einen senkrecht zu den Stecköffnungen ausgerichteten mit dem gebogenen Drahtabschnitt 11 verbundenen stegförmigen Materialansatz 20 mit Rastlappen 21 für den Drahtabschnitt 11 auf, der durch eine Strebe 22 stabilisiert ist. An der Außenwandung des Lagergehäuses 3 sind weitere Rastlappen 21 für den abgewinkelten Schenkelendbereich des Drahtabschnitts 11 angeformt. Der abgewinkelte Schenkelendbereich des Drahtabschnitts 11 verläuft parallel zu den Stecköffnungen 9 und 12 und stützt das Lagergehäuse 3 unterseitig ab. Am vorderseitigen Stirnende des Lagergehäuses 3 ist noch ein Rohrkörper 23 angeformt, der beim Umschäumen ein Endringen von Schaummaterial in die Stecköffnung 12 verhindern soll und der nach dem Schäumvorgang weggebrochen wird.

Die in der Stecköffnung 12 zunächst angeordnete Feder 13 ist als Blattfeder ausgebildet und weist einendig eine um 180 ° zurückgebogene, sich auf der Bodenwandung 16 abstützende Federzunge 24 und anderendig eine hochgewinkelte Lasche 25 mit einem Steckloch 26 und mit Krallen 27 auf, worin das die Stecköffnung 9 durchgreifende Ende des Drahtes 8 eingreift.

Der weiterhin in die Stecköffnung 12 eingreifende Achsschenkel 14 der Sonnenblendenachse 15, weist zum einen eine den Vorsprung 19 aufnehmende Ringnut 40 und zum anderen eine Abflachung 28 auf, die im Zusammenwirken mit der Feder 13 dazu dient, den Sonnenblendenkörper in der Nichtgebrauchslage zu halten.

Der zweite Achsschenkel 29 der Sonnenblendenachse 15 ist in die im Durchmesser kleinere Aufnahmebohrung 30 eines an der Fahrzeugkarosserie zu befestigenden, als Kunststoff - Spritzgußteil ausgebildeten Lagerbocks 31 eingepreßt. Im Verbindungsbereich zwischen dem Achsschenkel 29 und der Bohrung 30 weist der Achsschenkel 29 zumindest eine Ringnut 32 auf, in die Lagerbockmaterial fließt, so daß zwischen dem Achsschenkel 29 und dem Lagerbock 31 eine zwar drehbewegliche, jedoch axial festgelegte Verbindung besteht.

Der als Kunststoff - Spritzgußteil ausgebildete Gegenlagerstift 7 weist eine zweite Stecköffnung 33 für die Aufnahme des zweiten abgewinkelten Schenkelendbereich des Drahtabschnitts 11 und an den Endbereichen radial angeformte, im Kunststoffschaum verankerte Materialansätze 34 auf.

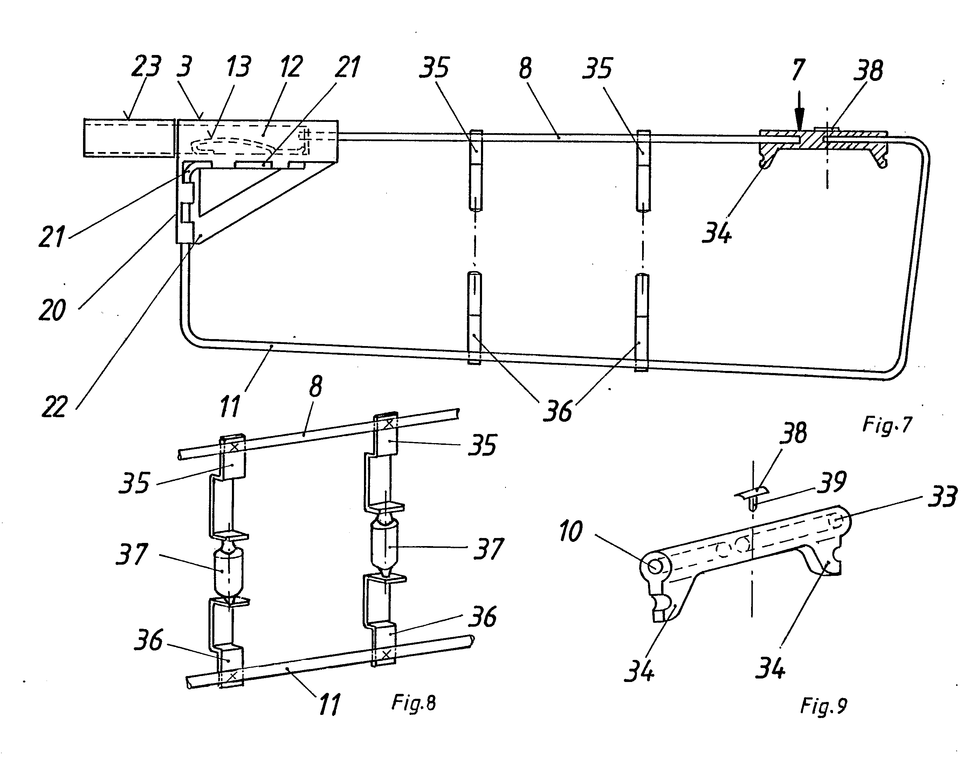

Das Ausführungsbeispiel gemäß Fig. 7 bis 9 ist zunächst mit dem vorbeschriebenen Ausführungsbeispiel identisch und weist insoweit dieselben Bezugzeichen auf, jedoch sind beim Ausführungsbeispiel nach Fig. 7 bis 9 zusätzlich Mittel für eine Beleuchtungseinrichtung vorgesehen. Diese Mittel bestehen zum einen aus an den Drahtabschnitten 8 und 11 befestigten Kontaktblechen 35, 36, zwischen denen jeweils eine elektrische Glühlampe, die bevorzugterweise als Soffitte 37 ausgebildet ist, angeordnet ist und zum anderen aus einem in den Gegenlagerstift eingesetzten und mit dem gebogenen Drahtabschnitt 11 verbundenen Kontakt 38. Den Drahtabschnitten 8, 11 kommt somit auch die Funktion elektrischer Leiter zu. Während die Kontaktbleche 36 z.B. durch Punktschweißen an den Drahtabschnitten befestigt sind, ist der Kontakt 38 mit einem Stift 39 versehen, der in eine in den Gegenlagerstift 7 und in den entsprechenden Endbereich des Drahtabschnitts 11 senkrecht eingearbeitete Bohrung (nicht gezeigt) eingepreßt ist. Der Kontakt 38 kontaktiert mit einem in der Lageraufnahme 5 des Gegenlagers 6 angeordneten nicht dargestellten Gegenkontakt, an dem z.B. eine Stromzuführungsleitung angeschlossen sein kann. Im diesem Fall wird die Masse über die Sonnenblendenachse, die in geeigneter Weist mit der Fahrzeugkarosserie verbunden ist, hergestellt.

Es versteht sich, daß im Sonnenblendenkörper 1 eine Ausnehmung zur Aufnahme einer Wanne oder dergleichen vorgesehen sein kann, wobei die Wanne zur Aufnahme der Lichtquellen, einer lichtdurchlässigen Abdeckung für diese und gegebenenfalls eines Spiegels dienen kann.

## Patentansprüche

1. Sonnenblende für Fahrzeuge, bestehend aus einem plattenförmigen Sonnenblendenkörper (1) mit etwa rechteckiger Umrißkontur, der aus Schaumkunststoff gebildet mit einer Umhüllung versehen und durch eien Verstärkungseinlage ausgesteift ist und der an einem Endbereich einer Längskante (2) ein mit der Verstärkungseinlage verbundenes, im Schaumkunststoff eingelagertes Lagergehäuse (3) und am anderen Endbereich derselben Längskante (2) einen, eine Aussparung (4) des Sonnenblendenkörpers (1) querenden, lösbar in die Lageraufnahme (5) eines an der Fahrzeugkarosserie befestigbaren Gegenlagers (6) einrastbaren Gegenlagerstift (7) aufweist, wobei das Lagergehäuse (3) zur Aufnahme einer Feder (13) sowie eines durch diese belasteten Achsschenkels (14) einer etwa L-förmig ausgebildeten Sonnenblendenachse (15) dient, deren anderer Achsschenkel (29) in der Aufnahmebohrung (30) eines an der Fahrzeugkarosserie befestigbaren Lagerbocks (31) angeordnet ist, dadurch gekennzeichnet, daß die Verstärkungseinlage aus zwei Drahtabschnitten (8, 11) besteht, von denen der erste (8) geradlinig mit dem Lagergehäuse (3) und dem Gegenlagerstift (7) verbunden ist, während der zweite (11) U-förmig gebogen ist und gegeneinander gerichtet abgewinkelte, ebenfalls mit dem Lagergehäuse (3) und dem Gegenlagerstift (7) verbundene Schenkelendbereiche aufweist, daß die Drahtabschnitte (8, 11) durch Steckverbindungen am Lagergehäuse (3) und am Gegenlagerstift (7) festgelegt sind, daß das Lagergehäuse (3) an einem Stirnende eine Stecköffnung (9) für den geraden Drahtabschnitt (8) und am anderen Stirnende eine Stecköffnung (12) für die gemeinsame Aufnahme der Feder (13) und des Achsschenkels (14) der Sonnenblendenachse (15) aufweist, daß die für die Aufnahme der Feder (13) und des Achsschenkels (14) der Sonnenblendenachse (15) vorgesehene Stecköffnung (12) des Lagergehäuses (3) durch eine Bodenwandung (16), zwei senkrecht daran angrenzende Seitenwandungen (7) und eine halbkreisförmige, dem Radius der Sonnenblendenachse (15) entsprechende Kopfwandung (18), umrandet ist, daß die Stecköffnung (12) im Bereich der Kopfwandung (19) einen den Öffnungsquerschnitt einengenden Vorsprung (19) aufweist, der in eine Ringnut (40) des Achsschenkels (14) eingerastet ist, daß die Stecköffnungen (9, 12) des Lagergehäuses (3) ineinander übergehen, daß die Feder (13) eine Blattfeder ist, die einendig eine um 180 ° umgebogene, sich auf der Bodenwandung der Stecköffnung abstützende Federzunge (24), anderendig eine abgewinkelte Lasche (25) mit einem Steckloch (26) zur kraftschlüssigen Verbindung mit dem entsprechenden Endbereich des geraden Drahtabschnitts (8) und zwischen der Federzunge (24) und der Lasche (25) einen bogenförmigen Verlauf aufweist und daß zwischen dem Lagerbock (31) und dem entsprechenden Achsschenkel (29) der Sonnenblendenachse (15) eine Steckverbindung vorgesehen ist, wobei der Durchmesser der Bohrung (30) im Lagerbock (31) kleiner als der Achsschenkeldurchmesser ist und der Achsschenkel (29) zumindest eine Ringnut (32) im Verbindungsbereich aufweist.

2. Sonnenblende nach Anspruch 1, dadurch gekennzeichnet, daß der Gegenlagerstift (7) zwei durch eine Wand voneinander getrennte, jeweils von den Stirnenden her zugängliche Stecköffnungen (10, 33) aufweist.

3. Sonnenblende nach Anspruch 1 oder 2, dadurch gekennzeichnet, daß das Lagergehäuse (3), der Gegenlagerstift (7) und der Lagerbock (31) als Kunststoff - Spritzgußkörper ausgebildet sind.

4. Sonnenblende nach einem oder mehreren der Ansprüche 1 bis 3, dadurch gekennzeichnet, daß der Gegenlagerstift (7) an seinen Endbereichen radial angeformte Materialansätze (34) aufweist, die im Schaumkunststoff verankert sind.

5. Sonnenblende nach einem oder mehreren der Ansprüche 1 bis 3, dadurch gekennzeichnet, daß der Gegenlagerstift (7) an seinen Endbereichen radial angeformte Materialansätze (34) aufweist, die im Schaumkunststoff verankert sind.

5. Sonnenblende nach einem oder mehreren der Ansprüche 1 bis 4, dadurch gekennzeichnet, daß das Lagergehäuse (3) einen senkrecht zu den Stecköffnungen (9, 12) ausgerichteten mit dem gebogenen Drahtabschnitt (11) verbundenen stegförmigen Materialansatz (20) aufweist und daß der gebogene Drahtabschnitt (11) derart am Lagergehäuse (3) festgelegt ist, daß einer der Schenkelendbereiche das Lagergehäuse (3) im Bereich der den Achsschenkel (14) und die Feder (13) aufnehmenden Stecköffnung (12) untergreift.

6. Sonnenblende nach einem oder mehreren der Ansprüche 1 bis 5, dadurch gekennzeichnet, daß an den Drahtabschnitten (8, 11) jeweils zumindest ein Kontaktblech (35, 36) durch Punktschweißen, Verkrallen oder dergleichen befestigt ist, daß zwischen den Kontaktblechen (35, 36) eine elektrische Glühlampe (37) (Soffitte) angeordnet ist und daß in den Gegenlagerstift (7) ein mit dem gebogenen Drahtabschnitt (11) verbundener Kontakt (38) eingesetzt ist, der mit einem in der Lageraufnahme (5) des Gegenlagers (6) angeordneten Gegenkontakt kontaktiert.

0230269

Fig.1  Fig.2  Fig.3  Fig.4  Fig.5  Fig.6

Fig.7

Fig.8

Fig.9

0230269